# EUROPÄISCHE PATENTSCHRIFT

(11) **EP 3 025 080 B1**
(45) Veröffentlichungstag und Bekanntmachung des Hinweises auf die Patenterteilung: **14.11.2018**
(21) Anmeldenummer: 14729325.2
(22) Anmeldetag: 10.06.2014
(51) Int. Cl.: F16L 5/08, H02G 3/22, F16L 55/132

(54) **PRESSKÖRPER FÜR EINE PRESSDICHTUNG UND PRESSDICHTUNG**
PRESSING BODY FOR COMPRESSION SEAL AND COMPRESSION SEAL
CORPS DE COMPRESSION POUR JOINT DE COMPRESSION ET JOINT DE COMPRESSION

(30) Priorität: 22.07.2013 EP 13177472
(43) Veröffentlichungstag der Anmeldung: 01.06.2016
(73) Patentinhaber: Hauff-Technik GmbH & Co. KG, 89568 Hermaringen (DE)
(72) Erfinder: DELIKOSTAS, Christos, 89537 Giengen (DE); KURZ, Ralf, 89537 Giengen (DE)
(74) Vertreter: König Szynka Tilmann von Renesse Patentanwälte Partnerschaft mbB
(86) Internationale Anmeldenummer: PCT/EP2014/062041
(87) Internationale Veröffentlichungsnummer: WO 2015/010822

(56) Entgegenhaltungen:
- EP-A1- 1 211 450
- WO-A1-96/35904
- US-A- 3 528 668

## Beschreibung

Die vorliegende Erfindung betrifft eine Pressdichtung mit einem Elastomerkörper zur dichtenden Anlage an einer Leitung, einem Presskörper und einem den Presskörper spannenden Spannbolzen.

Aus dem Stand der Technik sind unter anderem Pressdichtungen bekannt, bei welchen ein Elastomerkörper zwischen zwei Presskörpern entlang der Leitungsrichtung komprimiert wird und sich dadurch in Richtungen senkrecht dazu an die Leitung und beispielsweise eine Laibung einer Wandöffnung anlegt, also etwa an die Mantelinnenfläche einer Kernbohrung. Dies ist jedoch nur eine von mehreren Möglichkeiten zur Montage einer Pressdichtung, die das Anwendungsgebiet illustrieren und dabei die folgende Erfindung nicht einschränken soll. Die WO 96/35904 A1 betrifft eine aus Segmenten aufgebaute Pressdichtung mit einem Achselement zum Anzeigen des Verpressungszustands. Das Achselement dient als Anzeigestift und ist dazu in seiner Relativposition gegenüber einem Presskörper auf einer Seite des Elastomerkörpers festgelegt, erstreckt sich durch den Elastomerkörper und durchsetzt dann verspannungsabhängig den Presskörper auf der entgegengesetzten Seite des Elastomerkörpers. Werden die Presskörper beim Verspannen aufeinander zubewegt, zeigt das Achselement über seine Relativposition zum letztgenannten Presskörper den Verformungszustand des Elastomerkörpers an. Der Erfindung liegt die Aufgabe zugrunde, eine möglichst vorteilhafte Ausgestaltung eines Presskörpers mit einem Anzeigeelement zum Anzeigen des Verformungszustands eines Elastomerkörpers anzugeben.

Erfindungsgemäß löst diese Aufgabe ein Presskörper gemäß Anspruch 1.

Ein Monteur, der die Pressdichtung beispielsweise auf einer Baustelle an einer durch ein Wand- oder Bodenelement hindurchgeführten Leitung montiert, hat mit dem Anzeigeelement vorteilhafterweise ein Mittel an der Hand, das einen Rückschluss auf eine vom Presskörper auf den Elastomerkörper übertragene Kraft, also letztlich auf einen Anpressdruck des Presskörpers, und damit auch auf den Anpressdruck des Elastomerkörpers auf die Leitung ermöglicht. Der Monteur kann beispielsweise sicherstellen, dass der Elastomerkörper gut dichtend an der Leitung anliegt.

Das Anzeigeelement ist dabei vorzugsweise als in der Anwendung unverlierbarer Bestandteil des Presskörpers vorgesehen, ist also jedenfalls im zusammengesetzten Zustand der Pressdichtung baulich so in den Presskörper eingebaut, dass es nicht verlierbar ist. Dies vereinfacht einerseits die Handhabung und hilft andererseits zu gewährleisten, dass dann bei der Montage der Pressdichtung auch tatsächlich ein Anzeigeelement zur Verfügung steht, was Anwendungsfehler reduzieren helfen kann.

Das Visualisieren eines vom Presskörper auf den Elastomerkörper übertragenen Anpressdrucks ist hinsichtlich einer Überprüfung der dichtenden Anlage des Elastomerkörpers an der Leitung auch insofern vorteilhaft, als der Anpressdruck, mit welchem der Elastomerkörper an der Leitung anliegt, mit dem vom Presskörper auf den Elastomerkörper übertragenen Anpressdruck zusammenhängt. Die Erfinder haben festgestellt, dass in der Praxis die Kombination aus Pressdichtung und Leitung teilweise auch so gewählt wird, dass der Leitungsdurchmesser eigentlich außerhalb des optimalen Bereichs liegt, nämlich zu klein ist. Dementsprechend muss der Elastomerkörper für eine dichtende Anlage stärker verformt werden. Das Anzeigeelement, das den vom Presskörper auf den Elastomerkörper übertragenen Druck anzeigt, kann idealerweise auch in einem solchen Fall einen Rückschluss auf die Anlage des Elastomerkörpers an der Leitung ermöglichen, weil der Anpressdruck zwischen Presskörper und Elastomerkörper auch vom Anpressdruck zwischen Elastomerkörper und Leitung abhängt.

Eine "Durchgangsöffnung", zu deren Begrenzung hin die Leitung mit dem Elastomerkörper gedichtet werden kann, kann beispielsweise eine Durchgangsöffnung in einem Wand- oder Bodenelement oder auch generell einem Rohrelement, etwa einem Schutzrohr, in dem die eigentliche Leitung geführt wird, bzw. in einem der Befestigung der Leitung dienenden Befestigungselement sein. Die Durchgangsöffnung kann beispielsweise von dem Material des Wand-, Boden-, Rohr- oder Befestigungselements selbst "begrenzt" sein; es kann jedoch beispielsweise auch ein Rahmen oder eine Hülse in der Durchgangsöffnung vorgesehen sein und der Elastomerkörper daran anliegen.

Bei der "Leitung" kann es sich insbesondere um eine Stromleitung, Medienleitung, etwa eine Gas-, Wasser- oder Ölleitung, oder eine Telekommunikationsleitung, insbesondere Glasfaser-basiert, handeln bzw. auch um ein Leerrohr zur Aufnahme einer solchen Leitung. Vorzugsweise ist die Leitung in einem zur Leitungsrichtung senkrechten Schnitt kreisförmig, besonders bevorzugt gilt dies auch für die Durchgangsöffnung und wird der Elastomerkörper weiter bevorzugt in einem Ringraum angeordnet (und dichtet nach innen zur Leitung und nach außen zur Begrenzung der Durchgangsöffnung hin).

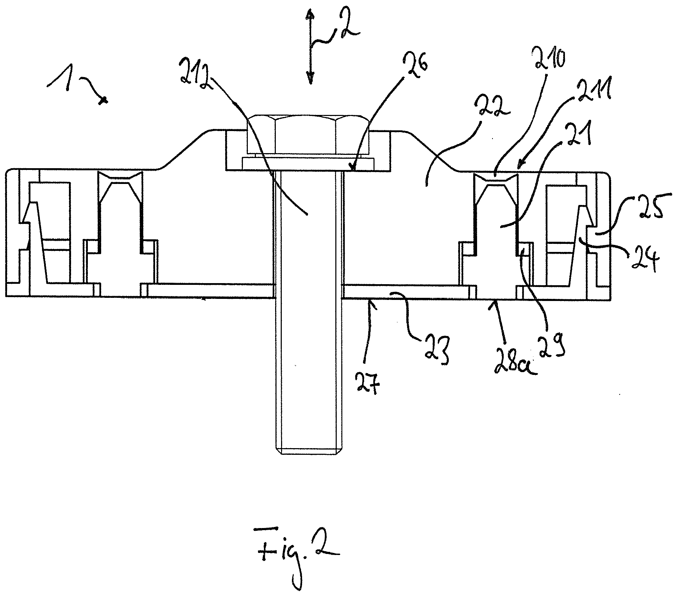

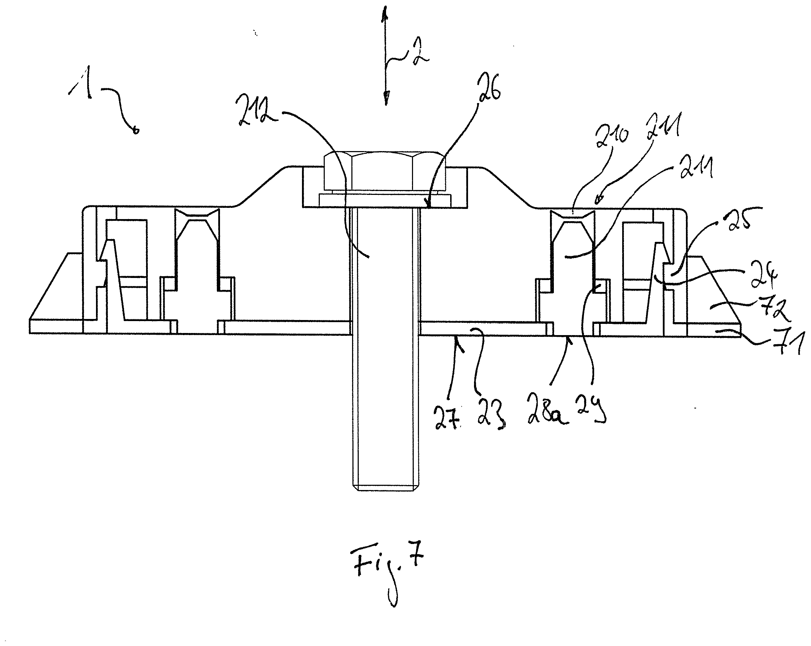

Weitere bevorzugte Ausgestaltungen der Erfindung finden sich in den abhängigen Ansprüchen und der nachstehenden Beschreibung, wobei auch weiterhin nicht im Einzelnen zwischen einer Darstellung der Pressdichtung, eines entsprechenden Presskörpers sowie jeweiligen Verfahrens- bzw. Verwendungsaspekten unterschieden wird; jedenfalls implizit ist die Offenbarung hinsichtlich sämtlicher Kategorien zu lesen. Erfindungsgemäß weist der Presskörper ein erstes Presskörperteil und ein zweites Presskörperteil auf, die dazu ausgelegt sind, über ein Verformungselement gelagert zueinander relativ beweglich zu sein, und im zusammengesetzten Zustand des Presskörpers über das Verformungselement gelagert zueinander relativ beweglich sind. Bei zusammengesetzter Pressdichtung liegt der Spannbolzen am ersten Presskörperteil an und überträgt bei dem das Anpressen des Elastomerkörpers auf die Leitung bewirkenden Anziehen des Spannbolzens Kraft darauf ("Anziehen" meint das die Verformung des Elastomerkörpers bewirkende Spannen des Spannbolzens). Die "Kraft übertragende Anlage" des Spannbolzens kann im Allgemeinen bspw. auch über ein in den Presskörper integriertes Gewinde erfolgen; vorzugsweise erfolgt sie über eine flächige Anlage des Spannbolzens am Presskörper (wobei etwa eine Unterlegscheibe als zum "Spannbolzen" gehörig gesehen wird). Das zweite Presskörperteil ist für eine Anlage am Elastomerkörper ausgelegt und liegt bei zusammengesetzter Pressdichtung vorzugsweise daran an.
Das "zweite Presskörperteil" kann auf zwei unterschiedliche Weisen ausgestaltet sein. Es kann nämlich einerseits als zwar am Elastomerkörper anliegendes, jedoch auf diesen keinen wesentlichen Anpressdruck übertragendes Presskörperteil ausgelegt sein, das als Anzeigeelement dient und vorzugsweise als Anzeigestift vorgesehen ist (vgl. bspw. Figuren 2 und 7); ein solches zweites Presskörperteil wird nachstehend auch als "Anzeige-Presskörperteil" bezeichnet. Das Anzeige-Presskörperteil liegt vergleichsweise kleinflächig am Elastomerkörper an, etwa bezogen auf die Anlagefläche des Presskörpers im Gesamten mit einem Flächenanteil von nicht mehr als 20 %, 15 % bzw. 10 %.

Das Anzeige-Presskörperteil wird durch den Elastomerkörper in eine gegenüber dem Ausgangszustand veränderte Relativposition bewegt, dieser drückt mit zunehmenden Anpressdruck des (übrigen) Presskörpers auf das Anzeige-Presskörperteil und verschiebt es, üblicherweise in einer der Richtung des Anpressens entgegengesetzten Richtung. Die den Anpressdruck übertragende Anlagefläche des übrigen Presskörpers hat im Bereich des Anzeige-Presskörperteils gewissermaßen ein "Loch", durch welches der verspannte Elastomerkörper ein Stück weit gedrückt werden kann; der verspannte Elastomerkörper kann sich also gewissermaßen in den Presskörper "hinein" wölben , also von einer die Anlagefläche des übrigen Presskörpers beinhaltenden Schnittebene geschnitten werden, und das Anzeige-Presskörperteil entsprechend verschieben.

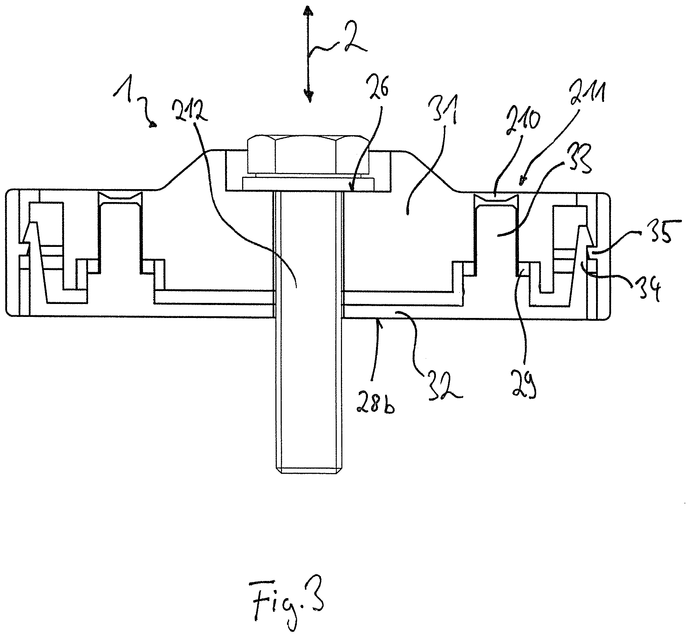

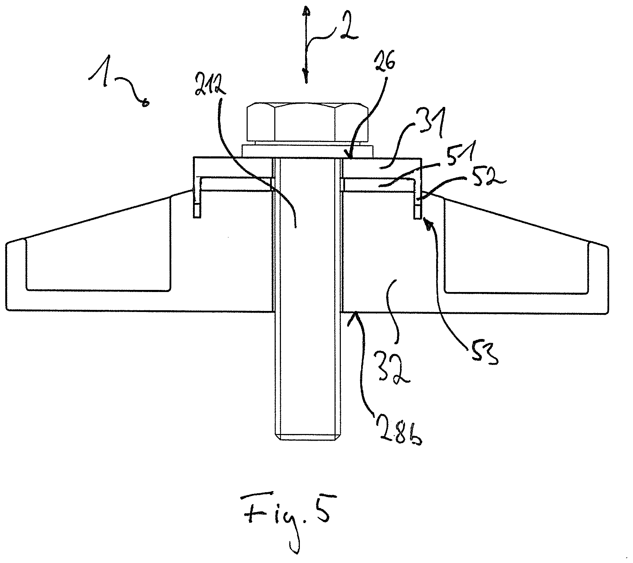

Anderseits kann das zweite Presskörperteil auch für die tatsächliche Anpressdruck-Übertragung auf den Elastomerkörper ausgelegt sein (vgl. bspw. Figuren 3 und 5), also großflächig die das Verformen des Elastomerkörpers und dessen Anliegen an die Leitung bewirkende Kraft auf den Elastomerkörper übertragen. Ein entsprechendes zweites Presskörperteil wird deshalb im Folgenden als "Anpress-Presskörperteil" bezeichnet. Bei einer bevorzugten Ausführungsform beträgt ein Flächeninhalt der "großflächigen" Anlagefläche mindestens 50 %, in dieser Reihenfolge zunehmend bevorzugt mindestens 60 %, 70 %, 80 % bzw. 90 %, des Flächeninhalts einer Presskörper-Projektionsfläche; letztere ergibt sich dabei durch senkrechte Projektion des gesamten Presskörpers in eine zur Leitungsrichtung senkrechte Ebene.

Soweit im Rahmen dieser Offenbarung ohne Konkretisierung von dem "zweiten Presskörperteil" bzw. "den beiden Presskörperteilen" (erstem und zweitem) die Rede ist, ist dies explizit auf beide Varianten "Anpress-Presskörperteil"/"Anzeige-Presskörperteil" zu lesen und sollen die Merkmale ausdrücklich für beide Varianten offenbart sein.

Generell sind das erste und das zweite Presskörperteil vorzugsweise in Leitungsrichtung zueinander relativ beweglich, besonders bevorzugt allein in Leitungsrichtung; generell durchsetzt der Spannbolzen vorzugsweise den Presskörper, besonders bevorzugt allein in Leitungsrichtung; generell durchsetzt der Spannbolzen vorzugsweise den Elastomerkörper, besonders bevorzugt allein in Leitungsrichtung; generell liegt die Anlagefläche zwischen Spannbolzen und Presskörper vorzugsweise senkrecht zur Leitungsrichtung; generell liegt die Anlagefläche zwischen Presskörper, insbesondere zweitem Presskörperteil, und Elastomerkörper vorzugsweise senkrecht zur Leitungsrichtung.

"Bestandteil" des Presskörpers kann bspw. sein, was an zumindest einem von Elastomerkörper und Spannbolzen eine Anlagefläche hat, vorzugsweise eine senkrecht zur Leitungsrichtung orientierte Anlagefläche, und/oder was zu einem Teil innerhalb eines solchen Bestandteils / solcher Bestandteile gehalten ist. Das erste und das zweite Presskörperteil können vorzugsweise miteinander verrastet sein, wobei diese Verrastung die Relativbeweglichkeit im Sinne eines Anschlags begrenzen kann (siehe Fig. 3); ein die Relativbeweglichkeit von erstem und zweiten Presskörperteil begrenzender Anschlag kann auch unabhängig von einer Verrastung der beiden bevorzugt sein (siehe Fig. 2).

Das Verformungselement kann sich in Abhängigkeit von dem auf den Elastomerkörper übertragenen Anpressdruck verformen, sodass die beiden Presskörperteile in Abhängigkeit von dem auf den Elastomerkörper übertragenen Anpressdruck eine veränderte Relativposition einnehmen. Ist ein bestimmter Druckwert erreicht, ist die Relativposition eine andere als im (nicht verspannten) Ausgangszustand. Die Relativposition und damit der auf den Elastomerkörper übertragene Anpressdruck sind an dem Anzeigeelement ablesbar, und zwar zumindest im Sinne einer qualitativen Anzeige einer Mindestanpresskraft.

Generell muss die Relativbewegung zwischen erstem und zweitem Presskörperteil über das Verformungselement nicht notwendigerweise kontinuierlich gelagert sein, sondern kann die Verformung etwa auch abrupt ("digital") bei Erreichen einer bestimmten Kraft erfolgen. Dazu könnte die Relativbeweglichkeit bspw. durch ein näherungsweise starres Verformungselement blockiert sein, etwa durch eine Materialbrücke zwischen den beiden Presskörperteilen; das starre Verformungselement kann bei einem bestimmten Druck brechen oder reißen. Nach der Verformung, die in diesem Fall irreversibel wäre, nehmen die Presskörperteile eine andere Relativposition ein, sodass im Ergebnis das Erreichen einer bestimmten Kraft am Anzeigeelement ablesbar ist. Die beiden Presskörperteile sind zueinander mehrstückig (nicht monolithisch); das Verformungselement ist auch mit den beiden Presskörperteilen jeweils mehrstückig.

In bevorzugter Ausgestaltung ist als Verformungselement ein elastisches Verformungselement vorgesehen, also ein Verformungselement, das (eine nicht übermäßige Beanspruchung vorausgesetzt) nach Wegnahme einer beim Anziehen des Spannbolzens wirkenden Last wieder seinen Ausgangszustand einnimmt; "elastisch" meint also weitgehend reversibel. Das elastische Verformungselement ist dabei nicht der dann dicht an der Leitung anliegende Elastomerkörper (der auch elastisch verformbar ist), sondern ein davon verschiedenes Teil, ist also zum Elastomerkörper mehrstückig (nicht monolithisch damit).

Das Vorsehen eines gesonderten elastischen Verformungselements zur Lagerung der Relativbewegung der beiden Presskörperteile kann etwa insoweit vorteilhaft sein, als auch im Falle einer erneuten Montage der Pressdichtung, etwa wenn die hindurchgeführte Leitung ersetzt werden muss, ein beim Anziehen des Spannbolzens auf den Elastomerkörper übertragener Druck ermittelt und damit letztlich die fachgerechte Montage überprüft werden kann. Indem das elastische Verformungselement als gesondertes Teil und vom Elastomerkörper entkoppelt vorgesehen wird, lässt sich der Presskörper zudem vergleichsweise einfach zur Anzeige einer jeweils anderen Kraft auslegen. Selbst wenn die beiden Presskörperteile nur zur Anzeige einer Relativposition ausgelegt sein sollten, kann die Relativposition in Abhängigkeit von dem elastischen Verformungselement (dessen Größe und/oder mechanischen Eigenschaften) bei unterschiedlichen Kraft-Werten erreicht werden, was beispielsweise die Zahl der unterschiedlichen in einer Fertigung vorzuhaltenden Teile reduzieren helfen kann; "Kraft-Wert" soll dabei nicht implizieren, dass ein diskreter Wert angezeigt wird, sondern bezieht sich auf einen im Rahmen der vorliegend diskutierten mechanischen Messverfahren zugänglichen Bereich.

Das "elastische Verformungselement" kann etwa ein Elastizitätsmodul von nicht mehr als 1 GPa, in dieser Reihenfolge zunehmend bevorzugt nicht mehr als 0,5 GPa, 0,2 GPa, 0,1 GPa, 0,08 GPa, 0,06 GPa, 0,04 GPa, 0,02 GPa bzw. 0,01 GPa, haben; mögliche Untergrenzen können beispielsweise bei 0,0001 GPa bzw. 0,0005 GPa liegen. Unabhängig davon kann das elastische Verformungselement beispielsweise vom Spannbolzen durchsetzt oder von einem nachstehend erläuterten Anzeigestift durchsetzt angeordnet werden.

Bei einer bevorzugten Ausführungsform ist als Anzeigeelement ein in der Relativposition ein Durchgangsloch in dem ersten Presskörperteil durchsetzender Anzeigestift vorgesehen; dieser soll das Durchgangsloch also nicht notwendigerweise bereits im Ausgangszustand (vor dem Anziehen des Spannbolzens) durchsetzen, sondern ggfs. auch erst in der Relativposition, also beim Erreichen einer bestimmten Kraft.

Bei einer bevorzugten Weiterbildung ist an dem Durchgangsloch im Ausgangszustand ein Öffnungsanzeiger vorgesehen, vorzugsweise ein das Durchgangsloch verschließender Öffnungsanzeiger, sodass dieses erst in der Relativposition vom Anzeigestift geöffnet wird, was beispielsweise einer Verschmutzung vor der Montage der Pressdichtung vorbeugen kann. Der Öffnungsanzeiger kann beispielsweise auch eine aufgebrachte, das Durchgangsloch (zumindest teilweise) abdeckende Folie oder eine Füllung sein; vorzugsweise ist der Öffnungsanzeiger jedoch einstückig mit dem ersten Presskörperteil ausgebildet und besonders bevorzugt über eine das Austrennen erleichternde Materialbrücke reduzierter Dicke (Sollbruchstelle) damit verbunden. Der Öffnungsanzeiger kann also idealerweise gleichzeitig mit dem ersten Presskörperteil durch beispielsweise Spritzguss hergestellt werden, was den Fertigungsaufwand reduzieren helfen kann.

Unabhängig vom Vorhandensein eines Öffnungsanzeigers am ersten Presskörperteil "weist das zweite Presskörperteil den Anzeigestift auf", was im Falle des Anpress-Presskörperteils bedeutet, dass der Anzeigestift daran vorgesehen und demgegenüber in seiner Relativposition festgelegt ist. Der Flächeninhalt einer senkrechten Projektion des Anzeigestifts in eine zur Leitungsrichtung senkrechte Ebene kann im Verhältnis zur Anlagefläche, mit welcher das Anpress-Presskörperteil am Elastomerkörper anliegt, vergleichsweise klein sein, beispielsweise nicht mehr als 20 %, 15 % bzw. 10 % davon betragen. Vorzugsweise ist der Anzeigestift einstückig mit dem Anpress-Presskörperteil ausgebildet.

Im Falle des Anzeige-Presskörperteils ist das den Anzeigestift "aufweisende" zweite Presskörperteil vorzugsweise selbst der Anzeigestift. Der Flächeninhalt einer senkrechten Projektion des Anzeigestifts in eine zur Leitungsrichtung senkrechte Ebene kann bezogen auf die Anlagefläche des Anzeige-Presskörperteils am Elastomerkörper entsprechend groß sein, etwa mindestens 50 %, 75 % bzw. 100 % davon betragen. Die projizierte Fläche kann sogar größer als die Anlagefläche sein, etwa wenn an dem Anzeigestift eine senkrecht zur Leitungsrichtung vorspringende Führungsnase, die auch als Anschlag dienen kann, vorgesehen ist (was bevorzugt ist). Auch unabhängig von den eben genannten Flächenverhältnissen ist eine solches, als Anzeigestift vorgesehenes zweites Presskörperteil in seiner Relativbeweglichkeit vorzugsweise durch einen Anschlag am ersten Presskörperteil begrenzt und damit auch im Presskörper gehalten.

Sowohl im Falle des Anpress- als auch des Anzeige-Presskörperteils kann für den Anzeigestift ein senkrecht zur Leitungsrichtung genommener Durchmesser von mindestens 1,5 mm bevorzugt sein, wobei mindestens 3 mm und mindestens 4,5 mm weiter bevorzugt sind; davon unabhängige Obergrenzen können beispielsweise bei 1,5 cm bzw. 1 cm liegen. Der Begriff "Durchmesser" soll generell im Rahmen dieser Offenbarung nicht zwingend eine Kreisgeometrie implizieren, sondern ist als Mittelwert zwischen kleinster und größter Erstreckung zu verstehen (der im bevorzugten Fall der Kreisgeometrie dem Kreisdurchmesser entspricht).

Bei einer bevorzugten Ausführungsform mit einem elastischen Verformungselement ist dieses zugleich das Anzeigeelement und kann die Relativposition zwischen erstem Presskörperteil und Anpress-Presskörperteil an der Verformung des elastischen Verformungselements senkrecht zur Leitungsrichtung abgelesen werden. Beim Anziehen des Spannbolzens werden das erste und das Anpress-Presskörperteil also in Leitungsrichtung aufeinander zubewegt und wird das bezogen auf die Leitungsrichtung vorzugsweise dazwischen angeordnete elastische Verformungselement dabei in Leitungsrichtung gestaucht und expandiert senkrecht dazu (im Allgemeinen wäre indes auch eine Lagerung denkbar, bei welcher das elastische Verformungselement beim Aufeinanderzubewegen der Presskörperteile zugbeansprucht wird). Diese Expansion des elastischen Verformungselements senkrecht zur Leitungsrichtung ist gegenüber einem feststehenden Referenzpunkt an dem Anpress- oder vorzugsweise dem ersten Presskörperteil ablesbar.

Das elastische Verformungselement kann also beispielsweise derart vorgesehen sein, dass sich bei einer auf den Elastomerkörper übertragenen Kraft, die ablesbar sein soll, der Außendurchmesser des elastischen Verformungselements um mindestens 20 %, in dieser Reihenfolge zunehmend bevorzugt mindestens 40 %, 60 % bzw. 80 %, gegenüber dem Außendurchmesser im unverformten Zustand vergrößert hat. In absoluten Werten ausgedrückt kann der Presskörper beispielsweise so ausgelegt sein, dass der Außendurchmesser beim Erreichen der Kraft (die ablesbar sein soll) um beispielsweise mindestens 2 mm, in dieser Reihenfolge zunehmend bevorzugt mindestens 3 mm, 4 mm, 5 mm, 6 mm, 7 mm, 8 mm, 9 mm bzw. 10 mm, zugenommen hat. Mögliche Obergrenzen können beispielsweise bei 5 cm bzw. 3 cm und (davon unabhängig) im Falle der vorstehend genannten Prozentangaben etwa bei 200 % bzw. 150 % liegen.

Bei einer Weiterbildung des Presskörpers mit als Anzeigeelement ausgelegtem elastischen Verformungselement ist in dem ersten Presskörperteil ein Sichtfenster vorgesehen, in welchem die Verformung des elastischen Verformungselements senkrecht zur Leitungsrichtung ablesbar ist. Das "Sichtfenster" soll zumindest ein gegenüber dem (bezogen auf Richtungen senkrecht zur Leitungsrichtung) äußeren Rand des ersten Presskörperteils nach innen zurückspringender Bereich sein, beispielsweise um mindestens 5 %, 10 % bzw. 15 % des Durchmessers des ersten Presskörperteils zurückspringender Bereich; dieser kann im Allgemeinen auch nach außen offen sein, ist jedoch vorzugsweise geschlossen, also als Durchgangsloch im ersten Presskörperteil vorgesehen.

Der Presskörper kann beispielsweise so ausgelegt sein, dass in dem Sichtfenster das Erscheinen des senkrecht zur Leitungsrichtung expandierten elastischen Verformungselements die gewünschte Kraft anzeigt. Selbstverständlich können auch mehrere Kraft-Werte ablesbar sein, also unterschiedliche Expansionszustände des elastischen Verformungselements senkrecht zur Leitungsrichtung. Diese können beispielsweise in einem sich senkrecht zur Leitungsrichtung über einen gewissen Bereich, beispielsweise über mindestens 2 mm, 4 mm, 6 mm bzw. 8 mm, erstreckenden Sichtfenster ablesbar sein (zum Beispiel "leer", "halb gefüllt", "gefüllt"), wobei an dem Sichtfenster besonders bevorzugt auch eine Skala vorgesehen sein kann.

Das Vorsehen einer Skala kann generell bevorzugt sein, also einer Skala, an der unterschiedliche Kraft-Werte ablesbar sind, und zwar über das Anzeigeelement. Die Skala kann beispielsweise am Anzeigeelement selbst vorgesehen sein, insbesondere an einem vorstehend erläuterten Anzeigestift, und verschiedene Relativpositionen davon gegenüber dem ersten Presskörperteil, beispielsweise einer Kante des ersten Presskörperteils, ablesbar machen. Andererseits kann etwa im Falle eines elastischen Verformungselements, das zugleich als Anzeigeelement dient, die Skala auch am ersten Presskörperteil, insbesondere an einem Sichtfenster, oder auch an der der Anlagefläche zum Elastomerkörper hin entgegengesetzten Seite des Anpress-Presskörperteils vorgesehen sein. An der Skala können beispielsweise mindestens drei unterschiedliche Kraft-Werte ablesbar sein (sie soll also mindestens drei definierte Markierungspunkte aufweisen).

Hinsichtlich des Aufbaus der Pressdichtung ist generell bevorzugt, dass der Spannbolzen den Elastomerkörper durchsetzt und an einer Stirnseite des Elastomerkörpers, welche jener mit erfindungsgemäßem Presskörper mit "Kraft-Anzeige" entgegengesetzt liegt, ebenfalls ein Presskörper vorgesehen ist, vorzugsweise ein Presskörper ohne Kraft -Anzeige. Durch Anziehen des den Elastomerkörper (und die Presskörper) durchsetzenden Spannbolzens werden die beiden, an entgegengesetzten Stirnseiten angeordneten Presskörper aufeinander zubewegt und wird der Elastomerkörper dementsprechend in Leitungsrichtung komprimiert, sodass er senkrecht dazu expandiert und sich dichtend an Leitung und Begrenzung der Durchgangsöffnung anlegt.

Besonders vorteilhaft kann das Vorsehen eines Presskörpers mit Kraft-Anzeige im Falle eines aus einer Mehrzahl für sich vorzugsweise einstückigen Elastomerkörperteilen aufgebauten Elastomerkörpers sein; die Elastomerkörperteile werden dabei über eine Mehrzahl den Elastomerkörper in Leitungsrichtung durchsetzende Spannbolzen verbunden. Je nach in Umlaufrichtung gemessener Größe einer abzudichtenden Durchgangsöffnung kann die Pressdichtung durch Hinzu- oder Wegnahme eines Elastomerkörperteils in ihrer entsprechenden Größe angepasst werden.

Die Erfinder haben allerdings festgestellt, dass in der Praxis trotz dieser Größenanpassung beim Verspannen teilweise sehr unterschiedliche Distanzen durch Elastomerkörper-Verformung überbrückt werden müssen, und zwar aufgrund unterschiedlicher Abstände zwischen Leitung und Begrenzung der Durchgangsöffnung. Zudem kann die Kraft, die zur Sicherstellung einer dichtenden Anlage des Elastomerkörpers aufzubringen ist, sehr groß werden, beispielsweise mindestens 6 kN, 9 kN bzw. 17 kN betragen; mögliche Obergrenzen können beispielsweise bei 72 kN, 32 kN bzw. 26 kN liegen. Eine entsprechend große Kraft lässt sich nun einerseits mit den hier dargestellten mechanischen Methoden vergleichsweise gut messen, und andererseits ist die Kontrolle der großen Kraft auch wichtig, weil ggf. auch schon ein geringfügiges Überschreiten die Zerstörung des Elastomerkörpers zur Folge haben könnte.

Die Elastomerkörperteile einer solchen modularen Pressdichtung sind jeweils paarweise komplementär und vorzugsweise baugleich; im zusammengesetzten Zustand der Pressdichtung sind zu jedem Elastomerkörperteil jeweils zwei Elastomerkörperteile in Umlaufrichtung nächst benachbart. In Leitungsrichtung gesehen überlappen zwei nächst benachbarte Elastomerkörperteile in einem schräg, vorzugsweise senkrecht, zur Leitungsrichtung orientierten Überlappungsbereich; ein sich in Leitungsrichtung, vorzugsweise allein in Leitungsrichtung, erstreckender Spannbolzen durchsetzt den Überlappungsbereich und dementsprechend die beiden nächst benachbarten Elastomerkörperteile, verbindet diese also.

Bezogen auf eine in Leitungsrichtung genommene Länge des Elastomerkörpers liegt der Überlappungsbereich vorzugsweise mittig im Elastomerkörper, also etwa zwischen 30 % und 70 %, 40 % und 60 % bzw. 45 % und 55 % der in Leitungsrichtung genommenen Elastomerkörperlänge. Der jeweils vom Spannbolzen durchsetzte Bereich des jeweiligen Elastomerkörperteils ist also entsprechend lang, was einen stabilen Zusammenhalt ermöglicht.

Generell kann es im Falle eines in Leitungsrichtung von einem/den Spannbolzen durchsetzten Elastomerkörpers bevorzugt sein, dass eine sich durch senkrechte Projektion des Elastomerkörpers in eine zur Leitungsrichtung senkrechte Ebene ergebende Elastomerkörper-Projektionsfläche zu in dieser Reihenfolge zunehmend bevorzugt mindestens 50 %, 60 %, 70 % bzw. 80 % von der Anlagefläche bzw. den im bevorzugten Fall mehrerer Presskörper entsprechenden Mehrzahl Anlageflächen bedeckt ist.

Auf die Anlagefläche eines Anpress-Presskörperteils am Elastomerkörper zurückkommend, kann bei einer bevorzugten Ausführungsform der Flächeninhalt dieser Anlagefläche mindestens 125 %, in dieser Reihenfolge zunehmend bevorzugt mindestens 110 %, 120 %, 130 % bzw. 140 %, des Flächeninhalts einer Presskörperteil-Projektionsfläche, die sich durch senkrechte Projektion des ersten Presskörperteils in eine zur Leitungsrichtung senkrechte Ebene ergibt. In anderen Worten ist das Anpress-Presskörperteil bezogen auf Richtungen senkrecht zur Leitungsrichtung entsprechend größer als das erste Presskörperteil vorgesehen und "spreizt" es die von dem Spannbolzen noch vergleichsweise kleinflächig auf das erste Presskörperteil übertragene Kraft auf.

Die Erfindung betrifft auch einen Pressdichtungssatz, der auch unabhängig von den Merkmalen des Hauptanspruchs, also unabhängig vom Vorhandensein eines Anzeigeelements, als Erfindung gesehen wird und auch in dieser Form offenbart sein soll. Die Presskörper der Pressdichtungen dieses Satzes weisen ein Spannbolzen-Anlage-Presskörperteil, an welchem der Spannbolzen anliegt (hinsichtlich verschiedener Möglichkeiten der Anlage wird auf die vorstehenden Ausführungen zum ersten Presskörperteil verwiesen), und ein Elastomerkörper-Anlage-Presskörperteil auf, wobei letzteres mit einer schräg, üblicherweise senkrecht, zur Leitungsrichtung orientierten Anlagefläche am Elastomerkörper anliegt; diese beiden Presskörperteile sind zueinander mehrstückig, also nicht monolithisch.

Der erfindungsgemäße Satz Pressdichtungen zeichnet sich dadurch aus, dass sich die Presskörper des Satzes einerseits in ihren Elastomerkörper-Anlage-Presskörperteilen unterscheiden; diese haben nämlich unterschiedlich große Anlageflächen am Elastomerkörper, beispielsweise sich um mindestens 5 %, 10 %, 15 % bzw. 20 % unterscheidende Anlageflächen (je verglichenem Paar Anlageflächen von der kleineren ausgehend). Andererseits sind die Spannbolzen-Anlage-Presskörperteile der Presskörper der Pressdichtungen des Satzes zueinander identisch. Eine "Schnittstelle" zum Spannbolzen hin ist also zu einer Vielzahl "Schnittstellen" zum Elastomerkörper hin kompatibel, sodass beispielsweise ein Monteur vor Ort die Anlagefläche auf die spezifische Situation anpassen kann. Diese Ausführungsform "Pressdichtungssatz" kann insbesondere auch in Verbindung mit der im vorletzten Absatz offenbarten Anlageflächen-Dimensionierung vorteilhaft sein und soll auch in dieser Hinsicht ausdrücklich auch unabhängig von dem Merkmal "Anzeigeelement" offenbart sein.

Ein eingangs erläutertes Paar aus erstem Presskörperteil und als Anpress-Presskörperteil vorgesehenem zweitem Presskörperteil kann (soweit die beiden mehrstückig sind) auch ein Paar aus Spannbolzen-Anlage- und Elastomerkörper-Anlage-Presskörperteil im eben genannten Sinne darstellen; es kann also der entsprechende Presskörper auch Teil eines Satzes Pressdichtungen sein (mit identischen ersten und unterschiedlichen Anpress-Presskörperteilen). Es sollen ausdrücklich auch sämtliche vorstehend für erstes und Anpress-Presskörperteil offenbarten Merkmale in Bezug auf einen solchen Satz offenbart sein.

Die Erfindung betrifft auch einen Satz Pressdichtungen, die jeweils ein erstes und zweites Presskörperteil (über ein elastisches Verformungselement zueinander relativ beweglich gelagert) aufweisen. Dabei sind die ersten Presskörperteile untereinander identisch und gilt dies ebenso für die zweiten Presskörperteile; die Presskörper unterschieden sich jedoch in dem jeweils vorgesehenen elastischen Verformungselement. Die elastischen Verformungselemente können also beispielsweise unterschiedliche Elastizitätsmoduli haben und/oder sich vorzugsweise in ihrer Größe unterscheiden, insbesondere in ihrer in Leitungsrichtung genommenen Größe. Für die Presskörper des Satzes sind so unterschiedliche Kraft-Werte eingestellt, bei denen die (aufgrund identischer erster und zweiter Presskörperteile) gleiche Relativposition erreicht wird. Besonders bevorzugt ist das elastische Verformungselement mehrstückig aufgebaut (aus einer Mehrzahl Verformungselement- Teilen) und ist die in Leitungsrichtung genommene Größe durch Hinzu- oder Wegnahme eines Verformungselement-Teils eingestellt.

Die Erfindung betrifft auch einen Presskörper für eine Pressdichtung nach einem der vorstehenden Ansprüche, der ein Anzeigeelement aufweist, an dem eine beim Anziehen des Spannbolzens auf den Elastomerkörper übertragene Kraft ablesbar ist.

Ferner betrifft die Erfindung die Verwendung eines solchen Presskörpers für eine Pressdichtung, und es sollen explizit auch sämtliche vorstehend für die Pressdichtung/den Presskörper erläuterten Merkmale hinsichtlich dieser Verwendung offenbart sein.

Im Folgenden wird die Erfindung anhand von Ausführungsbeispielen näher erläutert, wobei die einzelnen Merkmale auch in anderer Kombination erfindungswesentlich sein können und in dieser Form offenbart sein sollen. Weiterhin wird auch in der nachstehenden Darstellung nicht im Einzelnen zwischen den unterschiedlichen Anspruchskategorien unterschieden.

Im Einzelnen zeigt
- Fig. 1: einen Presskörper in einer Schrägansicht;
- Fig. 2: den Presskörper gemäß Fig. 1 in einem Längsschnitt in Seitenansicht;
- Fig. 3: eine alternative Ausführungsform eines erfindungsgemäßen Presskörpers, und zwar in einem Längsschnitt in Seitenansicht;
- Fig. 4: eine weitere erfindungsgemäße Ausführungsform, und zwar in einer Schrägansicht;
- Fig. 5: die Ausführungsform gemäß Fig. 4, und zwar in einem Längsschnitt in Seitenansicht;
- Fig. 6: eine weitere erfindungsgemäße Ausführungsform in einer Schrägansicht;
- Fig. 7: die Ausführungsform gemäß Fig. 6, und zwar in einem Längsschnitt in Seitenansicht;
- Fig. 8: eine weitere erfindungsgemäße Ausführungsform, und zwar in einem Längsschnitt in Seitenansicht;
- Fig. 9: ein Elastomerkörperteil einer modular aufgebauten Pressdichtung mit in Leitungsrichtung beidseits angesetzten Presskörpern.

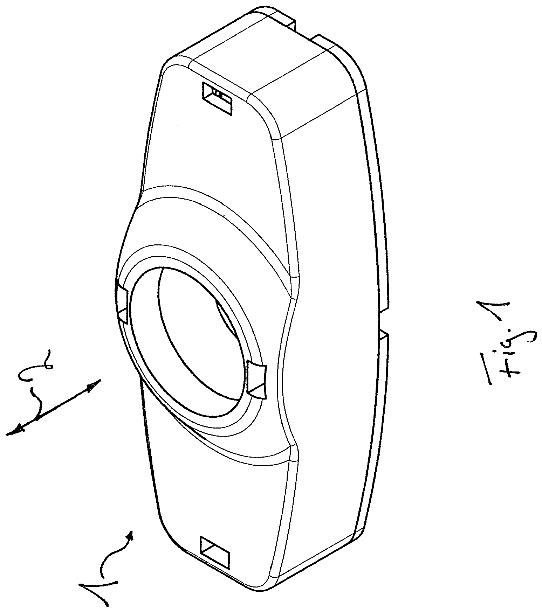

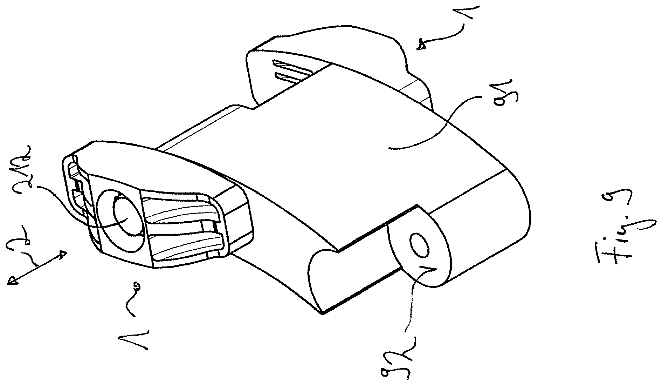

Fig. 1 zeigt einen Presskörper 1 in Schrägansicht, und zwar auf dessen der Anlagefläche am Elastomerkörper entgegengesetzte Seite blickend. In dem Presskörper 1 ist eine sich in Leitungsrichtung 2 erstreckende Durchgangsöffnung vorgesehen, in der bei zusammengesetzter Pressdichtung der Spannbolzen angeordnet ist. Zur Illustration der Anordnung des Presskörpers 1 am Elastomerkörper wird auf Fig. 9 und die entsprechende Beschreibung verwiesen.

Fig. 2 zeigt einen Längsschnitt durch den Presskörper 1 und veranschaulicht einen erfindungsgemäß in den Presskörper 1 integrierten Anzeigestift 21. Der Presskörper 1 ist aus einem Spannbolzen-Anlage-Presskörperteil 22 und einem Elastomerkörper-Anlage-Presskörperteil 23 zusammengesetzt, wobei die beiden Presskörperteile 22, 23 nicht beweglich miteinander verrastet sind, und zwar über eine sich in Leitungsrichtung 2 erstreckende Feder 24, die einen Vorsprung 25 hintergreift.

Bei zusammengesetzter Pressdichtung liegt an einer sich senkrecht zur Leitungsrichtung 2 erstreckenden Anlagefläche 26 des Spannbolzen-Anlage-Presskörperteils 22 ein Spannbolzen 212 an; das Elastomerkörper-Anlage-Presskörperteil 23 liegt mit einer Anlagefläche 27 am Elastomerkörper an. Als "Spannbolzen" 212 wird hier die Gesamtheit aus Gewindeschaft mit endseitigem Sechskant und Unterlegscheibe bezeichnet. Die Gesamtheit aus Spannbolzen-Anlage-Presskörperteil 22 und Elastomerkörper-Anlage-Presskörperteil 23 stellt das "erste Presskörperteil" dar (Gleiches gilt für Figur 7).

Der in den Presskörper 1 eingesetzte Anzeigestift 21 stellt in diesem Fall das "zweite Presskörperteil" dar, nämlich ein Anzeige-Presskörperteil, und liegt ebenfalls am Elastomerkörper an, allerdings mit einer im Vergleich zur Anlagefläche 27 kleinen Anlagefläche 28a. Wird der Elastomerkörper beim Anziehen des Spannbolzens in Leitungsrichtung komprimiert (vgl. die Erläuterung zu Fig. 9), wölbt er sich zunehmend in die Öffnung im Presskörper 1 hinein, in welcher der Anzeigestift 21 gehalten ist. Der Elastomerkörper drückt den Anzeigestift 21 in der Figur nach oben, und zwar gegen die Kraft des elastischen Verformungselements 29.

Das Loch im ersten Presskörperteil 22, 23, in welchem der Anzeigestift 21 angeordnet ist, ist an der den Anlageflächen 27, 28a entgegengesetzten Seite noch verschlossen. Der als Öffnungsanzeiger 210 vorgesehene Verschluss ist einstückig mit dem Spannbolzen-Anlage-Presskörperteil 22 ausgebildet, wobei als das Austrennen erleichternde Sollbruchstelle 211 ein umlaufender Bereich verringerter Materialdicke vorgesehen ist. Bei Erreichen einer bestimmten Kraft, also in einer bestimmten Relativposition des Anzeigestifts 21, wird der Öffnungsanzeiger 210 ausgestoßen und zeigt der Anzeigestift 21 dementsprechend das Erreichen der Kraft an.

Es ist auch eine Ausführungsform denkbar, bei welcher der Anzeigestift 21 nicht noch zusätzlich über das elastische Verformungselement 29 am ersten Presskörperteil 22, 23 gelagert ist, sondern ihn allein ein Verschluss 210 in der Ausgangsposition hält; insoweit wäre dann der Verschluss 210 als (in diesem Fall nicht elastisches) Verformungselement 29 zu sehen. Das Vorsehen des elastischen Verformungselements 29 kann jedoch bspw. insoweit vorteilhaft sein, als ein Presskörper 1 bei ansonsten baugleichen Teilen (also demselben Spritzgusswerkzeug) mit unterschiedlichen elastischen Verformungselementen 29 für unterschiedliche Kraft-Werte angepasst werden kann.

In dem Presskörper 1 gemäß Figur 2 sind zwei Anzeigestifte 21 vorgesehen, die bezogen auf eine zur Zeichenebene senkrechte, die Mittenachse des Spannbolzens 212 beinhaltende Ebene spiegelsymmetrisch angeordnet sind. Der Übersichtlichkeit halber ist jedoch vorrangig die in der Figur rechte Seite mit Bezugszeichen versehen und wird in der Beschreibung überwiegend darauf Bezug genommen.

Figur 3 zeigt eine weitere Ausführungsform eines erfindungsgemäßen Presskörpers 1; generell bezeichnen in den Figuren dieselben Bezugszeichen Teile mit derselben Funktion.

Der Presskörper 1 gemäß Figur 3 ist aus einem ersten Presskörperteil 31 und einem zweiten, dazu in Leitungsrichtung 2 relativ beweglichen Presskörperteil 32 zusammengesetzt. Die beiden Presskörperteile 31, 32 sind über das elastische Verformungselement 29 in ihrer Relativbewegung elastisch gelagert (wie auch im Falle von Figur 2 ist der Presskörper 1 spiegelsymmetrisch mit zwei Anzeigeelementen aufgebaut, wird der Übersichtlichkeit halber jedoch nur auf eines Bezug genommen).

Bei zusammengesetzter Pressdichtung liegt an der Anlagefläche 26 am ersten Presskörperteil 31 der Spannbolzen 212 an und liegt das zweite Presskörperteil 32 mit der Anlagefläche 28b am Elastomerkörper an. Durch Anziehen des Spannbolzens 212 und Anpressen des Presskörpers 1 auf den Elastomerkörper wird das elastische Verformungselement 29 mit zunehmender, über die Anlagefläche 28b auf den Elastomerkörper aufgebrachter Kraft auch zunehmend in Leitungsrichtung 2 komprimiert. Das erste 31 und das zweite Presskörperteil 32 werden dabei in Leitungsrichtung 2 aufeinander zubewegt, wobei beim Erreichen einer von der Ausgangsposition verschiedenen Relativposition ein am zweiten Presskörperteil 32 vorgesehener Anzeigestift 33 den Öffnungsanzeiger 210 öffnet. Der Öffnungsanzeiger 210 ist einstückig mit dem ersten Presskörperteil 31 ausgebildet und hängt über eine Materialbrücke 211 verringerter Dicke am übrigen ersten Presskörperteil 31. Im Ausgangszustand verschließt der Öffnungsanzeiger 210 die Öffnung im ersten Presskörperteil 31, in welcher der Anzeigestift 33 geführt ist.

Damit die beiden Presskörperteile 31, 32 beim Herausnehmen des Spannbolzens 212 nicht auseinanderfallen und als Einzelteile gehandhabt werden müssen, hintergreift eine am zweiten Presskörperteil 32 vorgesehene Feder 34 einen Vorsprung 35 am ersten Presskörperteil 31. Das erste 31 und das zweite Presskörperteil 32 sind verrastet.

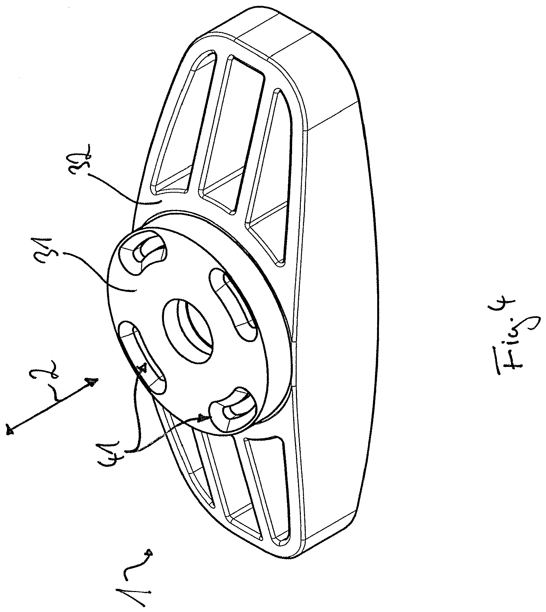

Die Figuren 4 und 5 zeigen eine weitere Ausführungsform eines erfindungsgemäßen Presskörpers 1, und zwar in einer Schrägansicht (Figur 4) ohne und in einem Längsschnitt in Seitenansicht (Figur 5) mit eingesetztem Spannbolzen 212. Auch bei dieser Ausführungsform sind ein erstes 31 und ein zweites Presskörperteil 32 vorgesehen, wobei ersteres eine Anlagefläche 26 für den Spannbolzen 212 und letzteres eine Anlagefläche 28b zum Elastomerkörper hin zur Verfügung stellt.

Die beiden Presskörperteile 31, 32 sind über ein von dem Spannbolzen 212 durchsetztes, elastisches Verformungselement 51 in Leitungsrichtung 2 relativ beweglich gelagert. Am ersten Presskörperteil 31 ist ferner ein sich in Leitungsrichtung 2 zum zweiten Presskörperteil 32 hin erhebender, umlaufender Vorsprung 52 vorgesehen und dazu ausgelegt, im verspannten Zustand in eine komplementäre Vertiefung 53 im zweiten Presskörperteil 32 zu greifen.

Beim Anziehen des Spannbolzens 212 werden die beiden Presskörperteile 31, 32 in Leitungsrichtung 2 aufeinander zubewegt, und zwar gegen die Kraft des elastischen Verformungselements 51. In Figur 5 ist ein Zustand gezeigt, in dem bereits eine bestimmte Kraft und damit die Relativposition erreicht sind; folglich ist das elastische Verformungselement 51 bereits in Leitungsrichtung 2 komprimiert und senkrecht dazu expandiert (im nicht verspannten Zustand erstreckt es sich senkrecht zur Leitungsrichtung in etwa so weit wie die Unterlegscheibe des Spannbolzens 212).

Infolge der Expansion senkrecht zur Leitungsrichtung ist das elastische Verformungselement 51 in den im ersten Presskörperteil 31 vorgesehenen Sichtfenstern 41 (Figur 4) zu sehen, was einem in Leitungsrichtung ("von oben") auf den Presskörper 1 blickenden Monteur das Erreichen einer bestimmten Kraft anzeigt. Über Vorsprung 52 und Ausnehmung 53 sind die beiden Presskörperteile 31, 32 einerseits in ihrer Relativbewegung geführt; andererseits deckt der in die Ausnehmung 53 greifende Vorsprung 52 das elastische Verformungselement 51 auch nach außen ab, was einen gewissen Schutz darstellen kann.

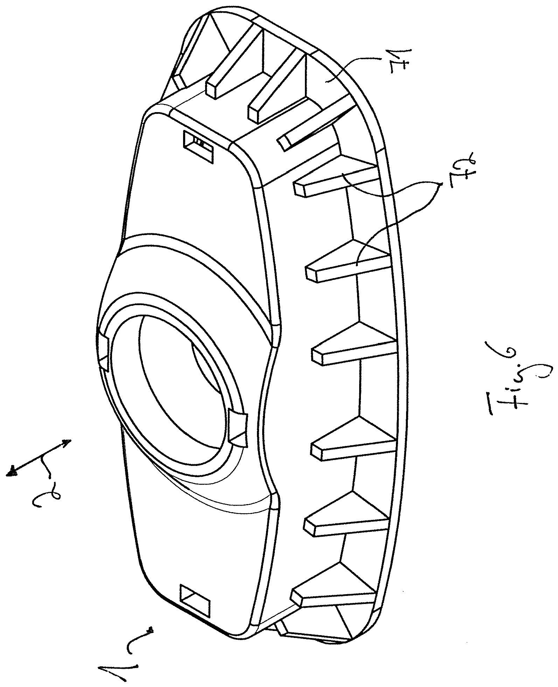

Die Fig. 6 und 7 zeigen eine weitere Ausführungsform, die hinsichtlich der Ausgestaltung des Anzeigeelements dem anhand von Fig. 2 erläuterten Presskörper 1 entspricht. Insoweit wird auf die vorstehende Beschreibung verwiesen.

Die Ausführungsform gemäß den Fig. 6 und 7 unterscheidet sich von jener gemäß Fig. 2 jedoch insoweit, als ein anderes Elastomerkörper-Anlage-Presskörperteil 23 vorgesehen ist, nämlich eines mit einer größeren Anlagefläche 27. Folglich wird die Kraft über eine größere Fläche verteilt auf den Elastomerkörper übertragen, was die Gleichmäßigkeit der Verpressung verbessern und beispielsweise einem "Hervorquellen" des Elastomerkörpers zwischen den Presskörpern vorbeugen helfen kann.

Zur Vergrößerung der Anlagefläche 27 ist an dem Elastomerkörper-Anlage-Presskörperteil 23 gemäß Fig. 7 im Vergleich zu jenem gemäß Fig. 2 zusätzlich ein umlaufender Anlageflächen-Vorsprung 71 angeformt, der durch Stege 72 gegenüber dem übrigen Elastomerkörper-Anlage-Presskörper 23 stabilisiert ist und dementsprechend Kraft auf den Elastomerkörper übertragen kann.

Von der Größe der Anlageflächen 27 abgesehen, also von den Elastomerkörper-Anlage-Presskörperteilen 23 abgesehen, unterscheiden sich die Presskörper 1 gemäß den Fig. 2 und 7 nicht; die übrigen Teile sind identisch. Die Presskörper 1 können als Presskörper 1 eines erfindungsgemäßen Pressdichtungssatzes vorgesehen sein.

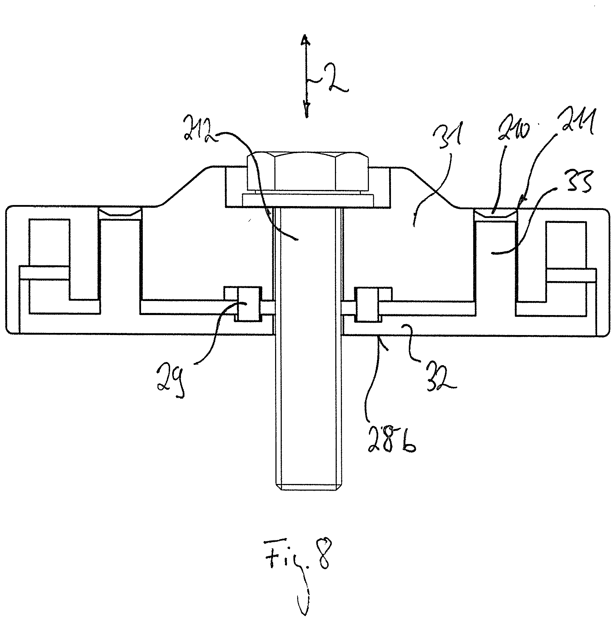

Fig. 8 zeigt eine weitere Ausführungsform, die eine gewisse Ähnlichkeit zu jener gemäß Fig. 3 hat, nämlich aus erstem 31 und zweitem Presskörperteil 32 aufgebaut ist, wobei die Presskörperteile 31, 32 über ein elastisches Verformungselement 29 gelagert in Leitungsrichtung 2 zueinander relativ beweglich sind.

Im Gegensatz zu der Ausführungsform gemäß Fig. 3 ist in diesem Fall nicht jeweils ein elastisches Verformungselement an den Anzeigestiften 33 (von diesen durchsetzt) vorgesehen, sondern ist ein elastisches Verformungselement 29 vom Spannbolzen 212 durchsetzt angeordnet. Gleichwohl wird auch bei der Ausführungsform gemäß Fig. 8 beim Anziehen des Spannbolzens 212 die Anlagefläche 28b auf den Elastomerkörper angedrückt und werden die beiden Presskörperteile 31, 32 gegen die Kraft des elastischen Verformungselements 29 aufeinander zubewegt. Bei Erreichen der Relativposition trennt der Anzeigestift 33 den Öffnungsanzeiger 210 aus, ist das Erreichen einer Kraft also für einen Monteur erkennbar.

In Abhängigkeit von der anzuzeigenden Kraft kann das elastische Verformungselement 29 auch um ein weiteres bzw. mehrere elastische Verformungselemente 29 ergänzt werden, die also in Leitungsrichtung 2 aneinander gesetzt werden. Damit wird der Abstand zwischen Öffnungsanzeiger 210 und Anzeigestift 33 vergrößert, muss also dementsprechend mehr Kraft auf den Elastomerkörper übertragen werden, bis der Öffnungsanzeiger ausgetrennt wird.

Fig. 9 zeigt einen Ausschnitt einer Pressdichtung, nämlich ein Elastomerkörperteil 91, das von einem Spannbolzen 212 durchsetzt wird und an dem bezogen auf die Leitungsrichtung 2 beidseits Presskörper 1 angeordnet sind. Der in der Schrägansicht von oben erkennbare Presskörper 1 ist ohne Anzeigeelement vorgesehen, und wird einem der vorstehend beschriebenen Presskörper 1 (mit Anzeigeelement) entgegengesetzt angeordnet.

Die Pressdichtung ist aus einer Vielzahl solcher Elastomerkörperteile 91 zusammengesetzt, die zueinander komplementär sind. An das in Fig. 9 gezeigte Elastomerkörperteil 91 werden also zwei Elastomerkörperteile angesetzt und damit verbunden, und zwar eines in der Figur vorderhalb und das andere hinterhalb. Durch entsprechendes Aneinandersetzen ergibt sich eine geschlossene Kette an Elastomerkörperteilen 91, die in Fig. 9 links oben läge.

Zwei nächst benachbarte Elastomerkörperteile 91 liegen in jeweils einem senkrecht zur Leitungsrichtung 2 orientierten Überlappungsbereich 92 aneinander an und werden durch einen den Überlappungsbereich (und damit die beiden Elastomerkörperteile 91) durchsetzenden Spannbolzen 212 miteinander verbunden.

Durch Anziehen der die Elastomerkörperteile 91 aneinander haltenden Spannbolzen 212 wird der Elastomerkörper in Leitungsrichtung komprimiert und expandiert senkrecht dazu, legt sich also dichtend an eine (nicht gezeigte) Leitung und die Laibung einer (nicht gezeigten) Wandöffnung an. Ein erfindungsgemäßer Presskörper 1 zeigt dabei das Erreichen einer für die dichtende Anlage optimalen Kraft an.

## Patentansprüche

1. Presskörper (1),
ausgelegt für eine Pressdichtung mit
einem Elastomerkörper (91) zur dichtenden Anlage an einer Leitung,
dem Presskörper (1) und
einem den Presskörper (1) spannenden Spannbolzen (212),
wobei der Presskörper (1) durch Anziehen des Spannbolzens (212) solchermaßen auf den Elastomerkörper (91) anpressbar ist, dass sich der Elastomerkörper dichtend an die Leitung anlegt,
und wobei ferner der Presskörper (1) ein Anzeigeelement aufweist, an welchem eine beim Anziehen des Spannbolzens (212) auf den Elastomerkörper (1) übertragene Kraft ablesbar ist,
wobei ferner der Presskörper (1) ein erstes Presskörperteil (22, 23, 31), ein zweites Presskörperteil (21, 32) und ein Verformungselement (29, 51) aufweist, wobei die beiden Presskörperteile (22, 23, 31; 21, 32) zueinander mehrstückig sind und auch das Verformungselement (29, 51) zu den beiden Presskörperteilen (22, 23, 31; 21, 32) jeweils mehrstückig ist,
wobei das erste Presskörperteil (21, 32) für eine Anlage des Spannbolzens (212) ausgelegt ist, sodass der Spannbolzen (212) beim Anziehen Kraft auf das erste Presskörperteil (22, 23, 31) überträgt, und das zweite Presskörperteil (21, 32) dazu ausgelegt ist, mit einer Anlagefläche (28a,b) am Elastomerkörper anzuliegen,
und wobei ferner das erste Presskörperteil (22, 23, 31) und das zweite Presskörperteil (21, 32) dazu ausgelegt sind, über das Verformungselement (29, 51) gelagert zueinander relativ beweglich zu sein, und in Abhängigkeit von der auf den Elastomerkörper (91) übertragenen Kraft eine Relativposition einzunehmen, die an dem Anzeigeelement ablesbar ist,
**dadurch gekennzeichnet, dass** das Verformungselement (29, 51) von dem Elastomerkörper (91) verschieden ist.

2. Presskörper (1) nach Anspruch 1, bei welchem als Anzeigeelement ein Anzeigestift (21, 33) vorgesehen ist, welchen Anzeigestift (21, 33) das zweite Presskörperteil (21, 32) aufweist, wobei der Presskörper (1) so ausgelegt ist, dass der Anzeigestift (21, 33) in der Relativposition ein Durchgangsloch in dem ersten Presskörperteil (22, 23, 31) durchsetzt.

3. Presskörper (1) nach Anspruch 2 mit einem Öffnungsanzeiger (210), der an dem Durchgangsloch vorgesehen ist und dieses vorzugsweise verschließt, welcher Öffnungsanzeiger (210) dazu ausgelegt ist, in der Relativposition von dem Anzeigestift (21, 33) geöffnet zu werden.

4. Presskörper (1) nach einem der vorstehenden Ansprüche, bei welchem die Anlagefläche (28b) einen Flächeninhalt hat, der mindestens 50 % des Flächeninhalts einer Presskörper-Projektionsfläche beträgt, welche sich durch senkrechte Projektion des gesamten Presskörpers (1) in eine zur Leitungsrichtung (2) senkrechten Ebene ergibt.

5. Presskörper (1) nach Anspruch 4, bei welchem der Flächeninhalt der Anlagefläche (28b) mindestens 125 % des Flächeninhalts einer Presskörperteil-Projektionsfläche beträgt, welche sich durch senkrechte Projektion des ersten Presskörperteils (31) in eine zur Leitungsrichtung (2) senkrechte Ebene ergibt.

6. Presskörper (1) nach Anspruch 4 oder 5, bei welchem das Verformungselement (51) ein elastisches Verformungselement (51) ist und das elastische Verformungselement (51) zugleich das Anzeigeelement ist, wobei die Relativposition an der Verformung des elastischen Verformungselements (51) senkrecht zur Leitungsrichtung (2) ablesbar ist.

7. Presskörper (1) nach Anspruch 6 mit einem Sichtfenster (41) in dem ersten Presskörperteil (31), in welchem die Verformung des elastischen Verformungselements (51) senkrecht zur Leitungsrichtung ablesbar ist.

8. Presskörper (1) nach einem der vorstehenden Ansprüche, bei welchem an dem Presskörper (1) eine Skala vorgesehen ist, an welcher über das Anzeigeelement eine Vielzahl auf den Elastomerkörper (91) übertragene Kraft-Werte ablesbar sind.

9. Pressdichtung mit einem Presskörper (1) nach einem der vorstehenden Ansprüche, einem Elastomerkörper (91) zur dichtenden Anlage an einer Leitung und einem den Presskörper (1) spannenden Spannbolzen (212), wobei der Presskörper (1) durch Anziehen des Spannbolzens (212) solchermaßen auf den Elastomerkörper (91) anpressbar ist, dass sich der Elastomerkörper (91) dichtend an die Leitung legt.

10. Pressdichtung nach Anspruch 9, bei welcher der Elastomerkörper (91) aus einer Mehrzahl Elastomerkörperteilen (91) vorgesehen ist, die solchermaßen komplementär ausgelegt und zusammensetzbar sind, dass im zusammengesetzten Zustand in Leitungsrichtung (2) gesehen ein Elastomerkörperteil (91) an jedem seiner Enden in Umlaufrichtung mit je einem anderen, in Umlaufrichtung nächstbenachbarten Elastomerkörperteil (91) in jeweils einem gewinkelt zur Leitungsrichtung (2) orientierten Überlappungsbereich (92) überlappt und durch jeweils einen den Überlappungsbereich (92) durchsetzenden Spannbolzen (212) verbunden ist.

11. Pressdichtungssatz mit einer Mehrzahl Pressdichtungen nach Anspruch 9 oder 10, welche Pressdichtungen jeweils einen Presskörper (1) mit einem Spannbolzen-Anlage-Presskörperteil (22), das für eine Anlage des Spannbolzens (212) ausgelegt ist, und einem dazu mehrstückigen Elastomerkörper-Anlage-Presskörperteil (23), das dazu ausgelegt ist, mit einer Anlagefläche (27, 28b) am Elastomerkörper anzuliegen, aufweisen, wobei sich die Presskörper (1) der Pressdichtungen des Satzes in ihren Elastomerkörper-Anlage-Presskörperteilen (23) unterscheiden, die Spannbolzen-Anlage-Presskörperteile (22) jedoch identisch sind.

12. Pressdichtungssatz mit einer Mehrzahl Pressdichtungen nach Anspruch 9 oder 10, wobei die ersten Presskörperteile (22, 23, 31) und die zweiten Presskörperteile (21, 32) der Presskörper (1) der Pressdichtungen des Satzes jeweils untereinander identisch sind, für die Presskörper (1) der Pressdichtungen des Satzes jedoch unterschiedliche elastische Verformungselemente (29, 51) vorgesehen sind.

13. Verwendung eines Presskörpers (1) nach einem der Ansprüche 1 bis 8 für eine Pressdichtung nach Anspruch 9 oder 10 oder in einem Pressdichtungssatz nach Anspruch 11 oder 12.

## Claims

1. A press body (1),
adapted for a press seal having
an elastomer body (91) for contacting a conduit sealingly,
said press body (1) and
a tensioning bolt (212) for tensioning said press body (1),
wherein said press body (1) can be pressed onto said elastomer body (91) by tensioning said tensioning bolt (212) in such a way that said elastomer body contacts said conduit sealingly,
and wherein further said press body (1) comprises a read out member at which a force transmitted to said elastomer body (1) during said tensioning of said tensioning bolt (212) can be read out,
wherein further said press body (1) comprises a first press body part (22, 23, 31), a second press body part (21, 32) and a deformation member (29, 51), wherein the two press body parts (22, 23, 31, 21, 32) are multipart with each other and also said deformation member (29, 51) is multipart with the two press body parts (22, 23, 31, 21, 32) respectively,
wherein said first press body part (22, 23, 31) is adapted for a contact with said tensioning bolt (212) so that said tensioning bolt (212) transmits a force onto said first press body part (22, 23, 31) during said tensioning and said second press body part (21, 32) is adapted for contacting said elastomer body with a contact surface (28a,b) and wherein further said first press body part (22, 23, 31) and said second press body part (21, 32) are adapted for being movable relatively to each other via said deformation member (29, 51) as a bearing and are adapted for being in a relative position in dependence of said force transmitted to said elastomer body (91), wherein said relative position can be read out at said read out member,
**characterized in that** said deformation member (29, 51) is different from said elastomer body (91).

2. The press body (1) according to claim 1, wherein a read out pin (21, 33) is provided as said read out member, wherein said press body (1) is adapted for said read out pin (21, 33) extending through a through hole in said first press body part (22, 23, 31) in said relative position.

3. The press body (1) according to claim 2 having an opening indicator (210) provided at said through hole and closing the later preferably, said opening indicator (210) being adapted for being opened by said read out pin (21, 33) in said relative position.

4. The press body (1) according to one of the preceding claims, wherein said contact surface (28b) has an area amounting to at least 50 % of the area of a projected area of said press body, said projected area resulting from a vertical projection of the whole press body (1) into a plane perpendicular to said conduit direction (2).

5. The press body (1) according to claim 4, wherein said area of said contact surface (28b) amounts to at least 125 % of the area of a projected area of a press body part, said projected press body part area resulting from a vertical projection of said first press body part (31) into a plane perpendicular to said conduit direction (2).

6. The press body (1) according to claim 4 or 5, wherein said deformation member (51) is an elastic deformation member (51), said elastic deformation member (51) itself being said read out member, wherein said relative position can be read out from said deformation of said elastic deformation member (51) perpendicularly to said conduit direction (2).

7. The press body (1) according to claim 6 having a window (41) in said first press body part (31), wherein said deformation of said elastic deformation member (51) perpendicularly to said conduit direction can be read out at said window.

8. The press body (1) according to one of the preceding claims, wherein a scale is provided at said press body (1), wherein a plurality of force values transmitted to said elastomer body (91) can be read out at said scale by said read out member.

9. A press seal having a press body (1) according to one of the preceding claims, an elastomer body (91) for contacting a conduit sealingly and a tensioning bolt (212) tensioning said press body (1), wherein said press body (1) can be pressed onto said elastomer body (91) by tensioning said tensioning bolt (212) in such a way that said elastomer body (91) contacts said conduit sealingly.

10. The press seal according to claim 9, wherein said elastomer body (91) is made of a plurality of elastomer body parts (91) being provided complementary to each other and being composable in such a way that, when being composed, seen in said conduit direction (2), an elastomer body part (91) overlaps at each of its ends with respect to a circumferential direction with respectably another elastomer body part (91) being directly adjacent with respect to said circumferential direction, namely overlaps respectively in an overlap region (92) oriented obliquely to said conduit direction (2), wherein said elastomer body parts being directly adjacent are connected to each other by a tensioning bolt (212) intersecting said respective overlap region (92).

11. A set of press seals with a plurality of press seals according to claim 9 or 10, said press seals having respectively a press body (1) with a tensioning-bolt-contact-press-body-part (22) being adapted for a contact with said tensioning bolt (212) and an elastomer-body-contact-press-body-part (23) multipart to said tensioning-bolt-contact-press-body-part, said elastomer-body-contact-press-body-part being adapted for contacting said elastomer body with a contact surface (27, 28b), wherein said press bodies (1) of said press seals of said set have different elastomer-body-contact-press-body-parts (23) but have identical tensioning-bolt-contact-press-body-parts (22).

12. A set of press seals with a plurality of press seals according to claim 9 or 10, wherein said fist press body parts (22, 23, 31) and said second press body parts (21, 32) of said press bodies (1) of said press seals of said set are identical to each other respectively, but said press bodies (1) of said press seals of said set are equipped with different elastic deformation members (29, 51).

13. A use of a press body (1) according to one of claims 1 to 8 for a press seal according to claim 9 or 10 or in a set of press seals according to claim 11 or 12.

## Revendications

1. Corps formant presse (1),
conçu pour un dispositif d'étanchéité par pression comportant :
un corps élastomère (91) permettant d'obtenir une pose assurant
une étanchéité sur une conduite,
ledit corps formant presse (1) et
un boulon de serrage (212) qui serre le corps formant presse (1), dans lequel le corps formant presse (1) peut être pressé contre le corps élastomère (91) par serrage du boulon de serrage (212) de telle manière que le corps élastomère soit plaqué de manière étanche contre la conduite, et dans lequel en outre le corps formant presse (1) présente un élément indicateur donnant une indication de la force transmise au corps élastomère (1) lors du serrage du boulon de serrage (212),
dans lequel en outre le corps formant presse (1) présente une première partie de corps formant presse (22, 23, 31), une deuxième partie de corps formant presse (21, 32) et un élément de déformation (29, 51), dans lequel les deux parties de corps formant presse (21, 22, 23, 31, 32) créant un dispositif composé de plusieures pièces et aussi l'élément de déformation (29, 51) et les parties de corps formant presse (21, 22, 23, 31, 32) créant un dispositif composé de plusieures pièces.
ladite première partie de corps formant presse (22, 23, 31) étant conçue pour être en contact avec le boulon de serrage (212), si bien que le boulon de serrage (212), pendant son serrage, transmet une force sur la première partie de corps formant presse (22, 23, 31), et ladite deuxième partie de corps formant presse (21, 32) étant conçue pour être en contact, par une surface de contact (28a, b), avec le corps élastomère, la première partie de corps formant presse (22, 23, 31) et la deuxième partie de corps formant presse (21, 32) étant en outre conçues pour être mobiles l'une par rapport à l'autre en étant supportées par l'élément de déformation (29, 51) et pour adopter, en fonction de la force transmise au corps élastomère (91), une position relative qui peut être indiquée sur l'élément indicateur,
**caractérisé en ce que** l'élément de déformation (29, 51) est différent du corps élastomère (91).

2. Corps formant presse (1) selon la revendication 1, dans lequel l'élément indicateur prévu est une tige indicatrice (21, 33) présente sur la deuxième partie de corps formant presse (21, 32), le corps formant presse (1) étant conçu de manière que la tige indicatrice (21, 33), en position relative, perce un trou traversant dans la première partie de corps formant presse (22, 23, 31).

3. Corps formant presse (1) selon la revendication 2, comportant un indicateur d'ouverture (210) qui est prévu sur le trou traversant en bouchant préférence ce dernier, ledit indicateur d'ouverture (210) étant conçu pour s'ouvrir, dans la position relative, sous l'effet de la tige indicatrice (21, 33).

4. Corps formant presse (1) selon l'une des revendications précédentes, dans lequel la surface de contact (28b) présente une superficie représentant au moins 50 % de la superficie d'une surface de projection du corps formant presse produite par projection orthogonale de l'ensemble du corps formant presse (1) dans un plan orthogonal au sens de la conduite (2).

5. Corps formant presse (1) selon la revendication 4, dans lequel la superficie de la surface de contact (28b) représente au moins 125 % de la superficie d'une surface de projection de la partie de corps formant presse produite par projection orthogonale de la première partie de corps formant presse (31) dans un plan orthogonal au sens de la conduite (2).

6. Corps formant presse (1) selon la revendication 4 ou 5, dans lequel l'élément de déformation (51) consiste en un élément de déformation élastique (51), ledit élément de déformation élastique (51) représentant également l'élément indicateur, la position relative pouvant être indiquée par la déformation de l'élément de déformation élastique (51) perpendiculairement au sens de la conduite (2).

7. Corps formant presse (1) selon la revendication 6, présentant une fenêtre de visualisation (41) dans la première partie de corps formant presse (31), qui donne une indication de la déformation de l'élément de déformation élastique (51) perpendiculairement au sens de la conduite.

8. Corps formant presse (1) selon l'une des revendications précédentes, dans lequel il est prévu, sur le corps formant presse (1), une échelle permettant de déterminer, par le biais de l'élément indicateur, une pluralité de valeurs relatives à la force transmise au corps élastomère (91).

9. Dispositif d'étanchéité par pression comportant un corps formant presse (1) selon l'une des revendications précédentes, un corps élastomère (91) permettant d'obtenir une pose assurant une étanchéité sur une conduite, et un boulon de serrage (212) qui serre le corps formant presse (1), dans lequel le corps formant presse (1) peut être pressé contre le corps élastomère (91) par serrage du boulon de serrage (212) de telle manière que le corps élastomère soit plaqué de manière étanche contre la conduite.

10. Dispositif d'étanchéité par pression selon la revendication 9, dans lequel le corps élastomère (91) se compose d'une pluralité de parties de corps élastomère (91) agencées pour être assemblées de manière complémentaire de manière que, une fois assemblées, vues dans le sens de la conduite (2), une partie de corps élastomère (91) soit en chevauchement, à chacune de ses extrémités dans la direction circonférentielle, avec une autre partie de corps élastomère (91) qui en est voisine dans la direction circonférentielle, dans une zone de chevauchement (92) orientée avec un certain angle par rapport au sens de la conduite (2), et de manière qu'elle y soit respectivement reliée par un boulon de serrage (212) traversant la zone de chevauchement (92).

11. Jeu de dispositifs d'étanchéité par pression comportant une pluralité de dispositifs d'étanchéité par pression selon la revendication 9 ou 10, lesquels dispositifs d'étanchéité par pression présentent chacun un corps formant presse (1) comportant une partie de corps formant presse (22) en contact avec le boulon de serrage, qui est conçue pour venir en contact avec le boulon de serrage (212), et une partie de corps formant presse (23) en contact avec le corps élastomère, créant un dispositif composé de plusieurs pièces, laquelle partie de corps formant presse (23) en contact avec le corps élastomère étant conçue pour venir en contact, par une surface de contact (27, 28b), avec le corps élastomère, dans lequel les corps formant presse (1) des dispositifs d'étanchéité par pression du jeu diffèrent par leurs parties de corps formant presse (23) en contact avec le corps élastomère mais les parties de corps formant presse (22) en contact avec le boulon de serrage demeurent identiques.

12. Jeu de dispositifs d'étanchéité par pression comportant une pluralité de dispositifs d'étanchéité par pression selon la revendication 9 ou 10, dans lequel les premières parties de corps formant presse (22, 23, 31) et les deuxièmes parties de corps formant presse (21, 32) des corps formant presse (1) des dispositifs d'étanchéité par pression du jeu sont respectivement identiques entre elles, mais dans lequel il est prévu, pour les corps formant presse (1) des dispositifs d'étanchéité par pression du jeu, des éléments de déformation élastiques (29, 51) différents.

13. Utilisation d'un corps formant presse (1) selon l'une des revendications 1 à 8 pour un dispositif d'étanchéité par pression selon la revendication 9 ou 10 ou dans un jeu de dispositifs d'étanchéité par pression selon la revendication 11 ou 12.
